# EUROPEAN PATENT SPECIFICATION

(11) **EP 2 607 131 B1**
(45) Date of publication and mention of the grant of the patent: **06.08.2014**
(21) Application number: 12193936.7
(22) Date of filing: 23.11.2012
(51) Int. Cl.: B60K 11/04

(54) **Radiator device for cooling a medium in a vehicle**
Kühlervorrichtung zum Kühlen eines Mediums in einem Fahrzeug
Dispositif de radiateur pour le refroidissement d'un support dans un véhicule

(30) Priority: 21.12.2011 SE 1151241
(43) Date of publication of application: 26.06.2013
(73) Proprietor: Scania CV AB, 151 87 Södertälje (SE)
(72) Inventor: Hällqvist, Thomas, 144 40 Rönninge (SE); Kardos, Zoltan, 151 35 Södertälje (SE)

(56) References cited:
- WO-A1-2005/075236
- DE-A1-102005 021 413
- DE-C1- 3 930 076
- DE-U1- 20 016 748
- GB-A- 517 096

## Description

### BACKGROUND TO THE INVENTION AND PRIOR ART

The present invention relates to a cooling device in a vehicle according to the preamble of claim 1.

Conventional air-cooled radiators for cooling of media of various kinds are usually situated in a front section of a vehicle. They usually comprise a number of parallel tubular elements which lead the medium from an inlet tank to an outlet tank. Heat-transferring elements ("ranks") may be provided in the gaps between adjacent tubular elements to increase the contact surface between the air and the radiator. They improve the heat transfer between the air and the medium in the radiator and hence the effectiveness of the radiator. They divide the space between two adjacent tubular elements into a number of air ducts which have an extent parallel with the intended direction of air flow through the radiator. When the air ducts are thus oriented and the heat-transferring elements are relatively thin-walled, the heat-transferring elements do not substantially reduce the air flow through the radiator.

Particularly in heavy vehicles there is a great need to cool media of various kinds, e.g. charge air, recirculating exhaust gases, refrigerants in AC installations, gearbox oil, hydraulic oil for retarders etc. Such media may be cooled directly or indirectly by coolant which is circulated in a cooling system. The space in the vehicle's front section is limited, particularly the space in contact with surrounding air making it possible to cool media to a temperature close to that of the surroundings.

Future vehicles are likely to be equipped with WHR (waste heat recovery) systems to convert waste heat on board to mechanical energy for running the vehicle. The waste heat may be taken from various heat sources on board, e.g. the combustion engine's exhaust gases. In a WHR system a circulating medium is vaporised in an evaporator by the warm exhaust gases. The vaporised medium is led to a turbine in which mechanical or electrical energy is extracted when the medium expands through the turbine. The medium is then led to a condenser in which it condenses before it can again be used to absorb heat from the exhaust gases in the evaporator. For a WHR system to function effectively, the medium needs to be cooled effectively in the condenser.

DE 20016748 U1 shows a radiator device which is intended to reduce the air resistance of a vehicle at increasing speed. The radiator device comprises three radiators arranged in a duct. One of the radiators is pivotally arranged and adapted to widen the duct at high speed to reduce the air resistance. Each radiator comprises air ducts situated at an angel to the forward side of the radiator so that air can be guided into the air ducts.

### SUMMARY OF THE INVENTION

The object of the present invention is to propose a radiator device with a radiator so designed that it can be fitted on a side surface of a vehicle and can have a good flow of surrounding air pass through it there without the assistance of energy-consuming fans or the like.

This object is achieved with the arrangement of the kind mentioned in the introduction which is characterised by the features indicated in the characterising part of claim 1. The radiator according to the invention thus comprises heat-transferring elements situated in gaps between adjacent tubular elements. The primary purpose of the heat-transferring elements is to serve as extra contact surfaces between the air and the tubular elements and thereby enhance the cooling of the medium in the tubular elements. If a conventional radiator is situated on a side surface of a vehicle, its conventional heat-transferring elements create air ducts in a transverse direction in the vehicle, resulting in large flow losses and very little air flow through the radiator. According to the present invention, to reduce the flow losses and thereby achieve a greater air flow through the radiator, the heat-transferring elements form air ducts situated at an angle to the forward side of the radiator so that the surrounding air can be guided into the air ducts with a change of direction of less than 90°. The air ducts being at a suitable angle relative to the direction of air flow makes it possible for flow losses in the air ducts to be kept at a relatively low level, resulting in a good flow of air through the radiator. The medium may thus be exposed to a good air flow through the radiator without use of energy-consuming fans. The radiator device comprises a flow element adapted to guiding air towards the radiator. Such a flow element may be part of the vehicle's chassis or side skirt or part of the radiator. Such a flow element at a suitable angle to the direction of air flow and the forward side of the radiator means that the air can be effectively guided in towards the forward side of the radiator during operation of the vehicle. The flow element creates with advantage a progressively decreasing flow cross-section for the air close to the radiator. A positive pressure may thus also be created in a region external to the forward side of the radiator, further promoting the air flow through the radiator. The radiator device comprises a flow passage for air on the rear side of the radiator. The air which has passed through the radiator is with advantage led away in a passage close to the rear side of the radiator. The air which flows through such a passage along the rear side of the radiator creates a reduced static pressure close to the outlet apertures of the air ducts, with consequent positive effects also on the air flow through the radiator. Such a flow passage may be created on the rear side of the radiator by means of an underlying wall surface which may for example belong to an existing component of the vehicle, e.g. a fuel tank.

In a preferred embodiment of the invention, said air ducts are at an angle within the range 30-60° to the plane. An angle within this range between the air ducts to the direction of air flow results in a relatively small pressure drop when the air passes through them. The fact that they run at an angle through the radiator makes the air ducts longer than if they ran straight through it. The contact surface of the air with the heat-transferring elements and the tubular elements thus becomes larger, improving the cooling of the medium by the air. The heat-transferring elements may form substantially straight air ducts through the radiator, but it is possible for their walls to be slightly curved in order to further reduce the flow losses of the air passing through the air ducts.

The radiator device may comprise a flow-regulating element by which the air flow through the radiator can be regulated, e.g. a louvre or the like situated at the forward side of the radiator. In certain operating situations where the cooling requirement is small and/or surrounding air is at a very low temperature, it may be appropriate to reduce or halt the air flow through the radiator.

According to another preferred embodiment of the invention, the heat-transferring elements take the form of elongate elements with curved portions which are alternately in contact with two adjacent tubular elements. Such heat-transferring elements may be formed to a V shape, U shape or the like. Unlike conventional heat-transferring elements, those according to the invention have walls which are at an angle to a transverse direction through the radiator. They thus define air ducts which run obliquely through the radiator such that the inlet apertures of the air ducts on the forward side of the radiator are movable relative to the apertures of the outlet ducts on the rear side of the radiator. The heat-transferring elements are made of material with good heat-conducting characteristics, e.g. aluminium.

According to another preferred embodiment, the fastening device comprises a frame structure suited to supporting at least two edge surfaces of the radiator. To ensure that the fastening device does not affect the air flow through the radiator, it is appropriate for the radiator to be situated in a frame structure which supports its edge portions where there are no air ducts. The frame structure comprises with advantage an upper frame portion which accommodates an upper edge portion of the radiator, and a lower frame portion which accommodates a lower edge portion of the radiator. In this case the radiator can be pushed into the space between the frame portions by a linear movement. The frame structure may comprise a base portion which supports the upper frame portion and the lower frame portion. It may take the form of a side portion of the frame structure. The base portion is with advantage provided with an inlet to receive the medium which is to be cooled in the radiator, and an outlet which receives the medium from the radiator after cooling. It is with advantage arranged for pivoting in the vehicle, making it possible for the frame structure to be swung out from a fitting position which it assumes during operation of the vehicle to a service position which it assumes when the radiator is to undergo cleaning or some other kind of service. In the swung-out service position the radiator can be removed from the frame structure by being pulled out from the space between the upper frame portion and the lower frame portion.

According to another preferred embodiment, the radiator device is arranged to cool coolant which circulates in a cooling system in which it cools the medium in a WHR system. WHR systems need efficient cooling to enable them to efficiently convert thermal energy to energy for operation of a vehicle. For a WHR system to be efficient, no energy-consuming cooling fans should be used to force air through the radiator. Radiators for WHR systems have therefore to be relatively large. On heavy vehicles there is usually space for fitting relatively large radiators on the vehicle's sides. It is therefore very appropriate to use a cooling device according to the present invention for direct or indirect cooling of the medium in a WHR system, but it is possible to use the radiator device in substantially all kinds of cooling systems with a circulating coolant for cooling of different media in a vehicle. The cooling device may also be used for direct cooling of various media which need to be cooled in a vehicle.

### BRIEF DESCRIPTION OF THE DRAWINGS

A preferred embodiment of the invention is described below by way of example with reference to the attached drawings, in which
- Fig. 1: depicts a cooling system in a vehicle in which the coolant is cooled in cooling devices according to the present invention,
- Fig. 2: is a view from above of the cooling devices in Fig. 1,
- Fig. 3: depicts the cooling device in more detail and
- Fig. 4: is a sectional view in the plane A-A of the cooling device.

### DETAILED DESCRIPTION OF A PREFERRED EMBODIMENT OF THE INVENTION

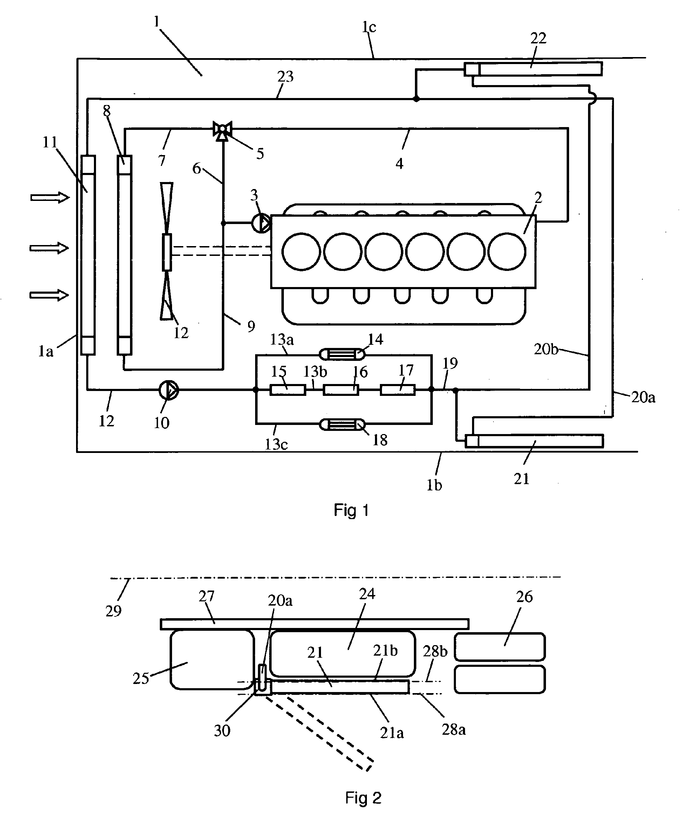

Fig. 1 depicts schematically a vehicle 1 which may be a heavy vehicle. It is powered by a combustion engine 2 which may be a diesel engine. The engine is cooled by a first cooling system with a circulating coolant. A coolant pump 3 circulates the coolant in the first cooling system. The coolant is led from the coolant pump 3 to the engine 2. After it has cooled the engine, it passes through a line 4 to a thermostat 5. If the coolant has not reached its operating temperature, the thermostat directs it back to the coolant pump 3 via a line 6. If the coolant has reached its operating temperature, substantially all of it is led through a line 7 to a radiator 8 in order to be cooled. This radiator is situated in a front section 1a of the vehicle where it is cooled by surrounding air. After the coolant has been cooled in the radiator 8, it is led back to the coolant pump 3 via a line 9.

The vehicle is provided with a second cooling system with a circulating coolant. The second cooling system is a low-temperature cooling system in which the coolant during operation of the engine is substantially always at a lower temperature than the coolant in the first cooling system. A coolant pump 10 circulates the coolant in the second cooling system. The second cooling system has a first radiator 11 fitted in the front section 1a of the vehicle ahead of the radiator 8 of the first cooling system. A radiator fan 12 generates a flow of surrounding air through the radiators 8, 11 during operation of the engine. As the first radiator 11 is situated ahead of the radiator 8 at the vehicle's front surface 1a, the coolant is cooled in the first radiator by air at the temperature of the surroundings, whereas the coolant in the second cooling system is cooled by air at a higher temperature. After the coolant has been cooled in the first radiator 11, it is directed by the coolant pump 10 to a number of heat exchangers via a line 12 which divides into three parallel lines 13a, 13b, 13c. The first parallel line 13a comprises an AC condenser 14 for cooling the refrigerant in an AC installation. The second parallel line 13b comprises a charge air cooler 15 for cooling of charge air, an EGR cooler 16 for cooling of recirculating exhaust gases, and a oil cooler 17 for cooling of gearbox oil. The third parallel line 13c comprises a WHR condenser 18 for cooling a circulating medium in a WHR system of the vehicle. The medium circulating in the WHR system may be water.

The WHR system comprises an undepicted evaporator in which the medium is vaporised by heat from a heat source on board the vehicle which may be the engine's exhaust gases, and a turbine which is driven by the vapour. When the vapour expands through the turbine, part of its thermal energy is converted to mechanical energy. A power transfer system conveys the turbine's motion to an output shaft of the engine and/or to a generator which generates electrical energy. The WHR system is employed to utilise waste heat on board the vehicle and convert it to mechanical energy for operation of the vehicle. The engine's fuel consumption may thus be reduced.

After the coolant in the second cooling system has cooled the media in the heat exchangers 14-18, the parallel lines 13a, 13b, 13c join together to form a common line 19 which then divides into two parallel lines 20a, 20b. The first parallel line 20a comprises a second radiator 21 in the second cooling system. This second radiator is situated on the vehicle's left side 1b, where it is cooled by surrounding air. The second parallel line 20b comprises a third radiator 22 in the second cooling system. This third radiator is situated on the vehicle's right side 1c, where it is cooled by surrounding air. Preferably, about half of the coolant in the second cooling system is led through the second radiator 21 and the other half through the third radiator 22. After the coolant has been cooled in the radiators 21, 22, the parallel lines 20a, 20b join together to form a common line 23 which leads the coolant to the first radiator 11 in the vehicle's front section 1a. In this case the coolant in the second cooling system thus undergoes two steps of cooling.

Fig. 2 is a view from above of the second radiator 21 in the second cooling system, which is situated on the vehicle's left side 1b. This second cooler is situated externally to a fuel tank 24 close to a container 25 which contains a battery. The vehicle's left rear wheels 26 are situated behind the fuel tank 24. The battery container 25 and the fuel tank 24 are fastened to a longitudinal side member 27 of the vehicle. The second radiator 21 is relatively flat with a constant width. It has a substantially planar forward side 21a situated in a plane 28a. It has a substantially planar rear side 21b situated in a plane 28b. The radiator is of uniform width, so the planes 28a, 28b are parallel. When it is in a fitted position on board the vehicle, these two planes are also parallel with a longitudinal axis 29 of the vehicle. This radiator is fastened in the vehicle by means of a pivotable fastening device 30 so that it can be swung out from fitting position to a service position represented by broken lines in Fig. 2. This may take place when the vehicle is stationary and the radiator is to undergo servicing or be cleaned or replaced.

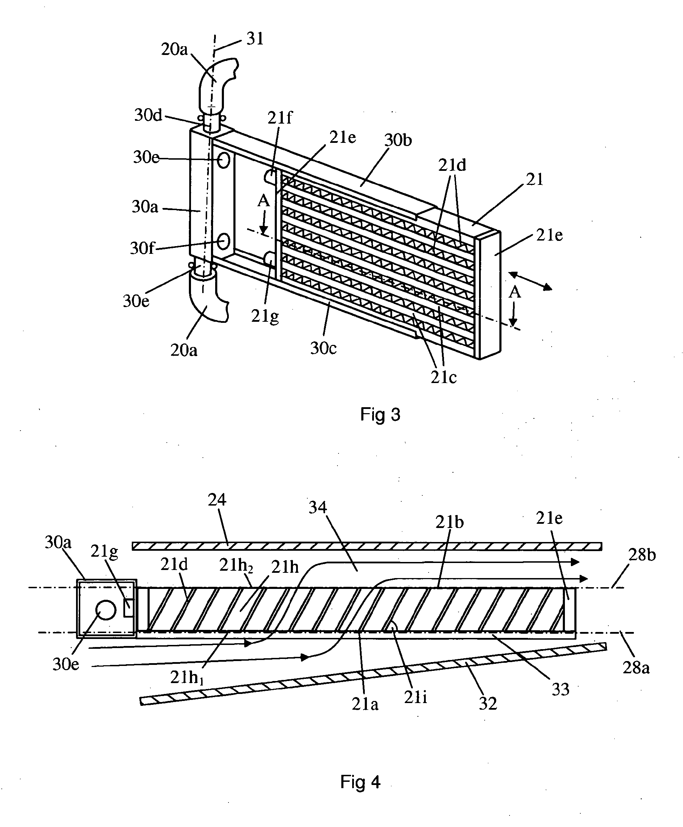

Fig. 3 depicts the second radiator 21 and the fastening device 30 in more detail. The radiator is of constant height and constant length and is therefore rectangular in shape. The frame structure 30 comprises a base portion 30a, an upper frame portion 30b and a lower frame portion 30c. The shape of the upper frame portion 30b is such that it can accommodate the upper edge portion of the radiator 21. The shape of the lower frame portion 30c is such that it can accommodate the lower edge portion of the radiator. These upper and lower frame portions are parallel to, and situated at a distance from, one another so that the radiator can be pushed into the intermediate space between them. The upper frame portion 30b has edge portions angled downwards and the lower frame portion 30c has edge portions angled upwards to ensure that in a fitted state the radiator 21 is held securely in the frame structure 30.

The second radiator 21 comprises a plurality of parallel elongate tubular elements 21c which lead coolant through it and are spaced from one another so as to leave gaps. The radiator 21 comprises two end portions 21e which contain connections between at least two adjacent tubular elements 21c so that the medium can be led between these tubular elements via the end portions 21e. Heat-transferring elements 21d are provided in the gaplike spaces between adjacent tubular elements 21 and are elongate and so formed that they have alternate upper portions in contact with an upper tubular element 21c and lower portions in contact with a lower tubular element 21c in the gaplike spaces. The heat-transferring elements 21d may be described as V-shaped or U-shaped. A primary purpose of them is to improve the heat transfer between the air which flows through the gaplike spaces and the coolant within the tubular elements 21c. The heat-transferring elements are made of material with good heat-conducting characteristics.

The base portion 30a of the frame structure 30 is provided at an upper end with an inlet pipe 30d for connecting a coolant line 20a. This inlet pipe is fastened rotatably in part of the vehicle. The base portion 30a contains an internal connection between the inlet pipe 30d and an inlet aperture 30e to lead coolant to the second radiator 21. The radiator 21 has an inlet pipe 21f adapted to being connected to the inlet aperture 30e. This inlet pipe may be provided with an O-ring or the like to make a tight connection possible with the base portion 30a. The coolant received in the radiator 21 is led through the parallel tubular elements 21c and out from the radiator via an outlet pipe 21g which is connectable to an outlet aperture 30f of the base portion 30a to receive coolant. The outlet pipe 21g is with advantage likewise provided with an O-ring or the like to ensure a tight connection to the base portion 30a. The base portion is provided in a lower region with an outlet pipe 30e for connecting a coolant line 20a. The outlet pipe 30e is fastened rotatably in part of the vehicle. The base portion's inlet pipe 30d and outlet pipe 30e are fastened rotatably about a common axis of rotation 31, making it possible to pivot the frame structure 30 and the radiator 21 together to the swung-out position depicted in Fig. 2. The frame structure 30 has an undepicted locking mechanism or the like which has to be released to allow the frame structure and the radiator to be swung out from the fitting position to the service position.

A flow element 32 situated at a location external to the radiator 21 has an upstream end which forms an aperture 32a to receive air during operation of the vehicle, and a downstream end which substantially abuts against the radiator 21. This flow element is situated at an angle to the air led in through the aperture so that the air is directed towards the radiator's forward side 21a. The flow element may take the form of part of the vehicle's bodywork, side skirt or the like. It may alternatively be part of the radiator 21. A schematically indicated air-regulating element 33 in the form of a louvre or the like is provided in front of the radiator's forward side 21a and can be used to reduce, or completely halt if so desired, the air flow through the radiator.

The heat-transferring elements 21d form in the gaplike spaces a plurality of parallel air ducts 21h which run from inlet apertures 21h₁ on the radiator's forward side 21a to outlet apertures 21h₂ on its rear side 21b. These air ducts have an extent which is with advantage at an angle 21i of 30 to 60° to the vehicle's longitudinal axis 29 and the plane 28a through the radiator's forward side 21a. The air ducts have in this case a substantially straight extent through the radiator 21. The angled air ducts 21h subject the air to relatively modest changes of direction to guide it into the air ducts, so the flow losses of the air passing through the radiator are relatively small. The air flow through the radiator and the cooling of the coolant in the tubular elements 21a are thus promoted. The air which has passed through the air ducts 21h is received in an air passage 34 on the rear side of the radiator which is defined by the radiator's rear side 21b and a wall surface of the fuel tank 24. The air in this air passage 34 which flows rearwards in the vehicle along the radiator's rear side 21b lowers the static pressure close to the outlet apertures 21h₂ of the air ducts, thus likewise promoting the air flow through the radiator 21. The third radiator 22 is of similar configuration to the second radiator 21 and is likewise situated in a similar frame structure 30 on the vehicle's right side 1c.

During operation of the vehicle, the cold coolant in the second cooling system cools the media in the heat exchangers 14-18. After passing through these heat exchangers, the coolant is at a raised temperature. It is then led via the line 20a to the second radiator 21 on the vehicle's left side or to the third radiator 22 on the vehicle's right side 1c. The coolant is cooled in the second radiator 21 by air which flows through its angled air ducts 21h. The coolant thus undergoes effective cooling when cooled by air at the temperature of the surroundings. The coolant led to the third radiator 22 undergoes similar cooling on the vehicle's right side 1c. Having now undergone a first step of cooling, the coolant will thus be at a relatively low temperature when it reaches the first radiator 11 in the vehicle's front section 1a, in which it undergoes a second step of cooling by air at the temperature of the surroundings. The coolant leaving the first radiator 11 and reaching the heat exchangers 14-18 will thus be at a temperature substantially corresponding to that of the surroundings.

In this case, the vehicle's side surfaces are thus used for fitting air-cooled radiators 21, 22, which may here be relatively large. The flow element 32 makes it possible for air flowing along the vehicle's side surface to be led in towards the radiator 21. It also creates close to the air duct inlet apertures 24h₁ on the radiator's forward side 21a positive pressure which promotes the air flow through the ducts. The fact that the air ducts are at a relatively favourable angle 21i to the direction of air flow means that the flow resistance to air passing through them is relatively slight, likewise promoting a large air flow through the radiators 21, 22. Finally, the flow passage 34 on the radiator's rear side causes a negative pressure at the radiator's outlet apertures 21h₂, likewise promoting the air flow through the radiator 21. WHR systems need a large cooling capacity if they are to convert thermal energy efficiently to mechanical energy. In this case the WHR system can provide good cooling of the second cooling system which thus comprises radiators 21, 22 at the vehicle's side surfaces 1b, 1c. The WHR system results in this case in a favourable situation for supplying energy for operation of the vehicle.

The invention is in no way limited to the embodiment to which the drawings refer but may be varied freely within the scopes of the claims.

## Claims

1. A radiator device for cooling a medium in a vehicle (1), which radiator device comprises a radiator (21) comprising a plurality of tubular elements (21c) which lead the medium through the radiator (21), heat-transferring elements (21d) which are situated in gaplike intermediate spaces between adjacent tubular elements (21c) so that they divide the gaplike space between two adjacent tubular elements into air ducts (21h) which have an extent between inlet apertures (21h₁) situated in a substantially common plane (28a) on a forward side (21a) of the radiator and outlet apertures (21h₂) situated on a rear side (21b) of the radiator (21), and a fastening device (30) for fitting the radiator (21) at a side surface (1b, 1c) of the vehicle (1), which air ducts (21h) form an angle (21i) of less than 90° to the plane (28a) so that surrounding air flowing along the radiator's forward side (21a) can be led into the air ducts (21h) with a change of direction of less than 90°**characterised in that** the radiator device comprises a flow element (32) adapted to guiding air towards the radiator's forward side (21a) during operation of the vehicle (1) and a flow passage (34) for air on the radiator's rear side (21 b) whereby the air flows along the radiator's rear side (21 b) during operation of the vehicle (1).

2. A radiator device according to claim 1, **characterised in that** said air ducts (21h) form an angle (21i) within the range 30-60° to the plane (28a).

3. A radiator device according to claim 1, **characterised in that** the heat-transferring elements (21d) form substantially straight air ducts (21 h) through the radiator (21).

4. A radiator device according to any one of the foregoing claims, **characterised in that** it comprises a flow regulating element (33) by which the air flow through the radiator (21) can be regulated.

5. A radiator device according to any one of the foregoing claims, **characterised in that** the heat-transferring elements (21d) take the form of elongate elements with curved portions which are alternately in contact with two adjacent tubular elements (21 c).

6. A radiator device according to any one of the foregoing claims, **characterised in that** the fastening device (30) comprises a frame structure (30a, 30b, 30c) adapted to accommodating at least two edge portions of the radiator (21).

7. A radiator device according to any one of the foregoing claims, **characterised in that** the fastening device (30) is fastened in the vehicle (1) in such a way that it can be swung about a pivot axis (31) between a fitting position and a service position.

8. A radiator device according to any one of the foregoing claims, **characterised in that** it is arranged to cool coolant which circulates in a cooling system which cools a medium in a WHR system (18).

## Patentansprüche

1. Kühlervorrichtung zum Kühlen eines Mediums in einem Fahrzeug (1), wobei die Kühlervorrichtung umfasst: einen Kühler (21), umfassend eine Vielzahl an Röhrenelementen (21c), die das Medium durch den Kühler (21) leiten, Wärmeübertragungselemente (21d), die in lückenartigen Zwischenabständen zwischen benachbarten Röhrenelementen (21c) angeordnet sind, so dass die lückenartigen Abstände zwischen zwei benachbarten Röhrenelementen in Lüftungskanäle (21h) unterteilt werden, die sich zwischen Einlassöffnungen (21h₁), die im Wesentlichen in einer gemeinsamen Ebene (28a) auf der Vorderseite (21a) des Kühlers angeordnet sind, und Auslassöffnungen (21h₂) erstrecken, die auf der Rückseite (21b) des Kühlers (21) angeordnet sind, und eine Befestigungsvorrichtung (30), die dafür vorgesehen ist, den Kühler (21) an einer Seitenfläche (1b, 1c) des Fahrzeugs (1) anzuordnen, wobei die Lüftungskanäle (21h) einen Winkel (21i) von weniger als 90° zu der Ebene (28a) bilden, so dass Umgebungsluft, die entlang der Vorderseite (21a) des Lüfters strömt, mit einem Richtungswechsel von weniger als 90° in die Lüftungskanäle (21h) leitbar ist,
**dadurch gekennzeichnet, dass** die Kühlervorrichtung umfasst: ein Strömungselement (32), das dazu ausgebildet ist, während des Betriebs des Fahrzeugs (1) Luft zu der Vorderseite (21a) des Kühlers zu leiten, und einen Strömungsdurchgang (34) für die Luft auf der Rückseite (21b) des Kühlers, wobei die Luft während des Betriebs des Fahrzeugs (1) entlang der Rückseite (21b) des Kühlers strömt.

2. Kühlervorrichtung nach Anspruch 1, **dadurch gekennzeichnet, dass** die Lüftungskanäle (21h) einen Winkel (21i) in dem Bereich von 30-60° zu der Ebene (28a) bilden.

3. Kühlervorrichtung nach Anspruch 1, **dadurch gekennzeichnet, dass** die Wärmeübertragungselemente (21d) im Wesentlichen gerade Lüftungskanäle (21h) durch den Kühler (21) bilden.

4. Kühlervorrichtung nach einem der vorangehenden Ansprüche, **dadurch gekennzeichnet, dass** ein strömungsregulierendes Element (33) vorgesehen ist, mittels dem die Luftströmung durch den Kühler (21) regulierbar ist.

5. Kühlervorrichtung nach einem der vorangehenden Ansprüche, **dadurch gekennzeichnet, dass** die Wärmeübertragungselemente (21d) die Form von länglichen Elementen mit kurvenförmigen Abschnitten aufweisen, die wechselseitig in Kontakt mit zwei benachbarten Röhrenelementen (21c) sind.

6. Kühlervorrichtung nach einem der vorangehenden Ansprüche, **dadurch gekennzeichnet, dass** die Befestigungsvorrichtung (30) eine Rahmenstruktur (30a, 30b, 30c) umfasst, die dazu ausgebildet ist, mindestens zwei Randabschnitte des Kühlers (21) aufzunehmen.

7. Kühlervorrichtung nach einem der vorangehenden Ansprüche, **dadurch gekennzeichnet, dass** die Befestigungsvorrichtung (30) derart in einem Fahrzeug (1) befestigt ist, dass sie schwenkbar um eine Drehachse (31) zwischen einer Montageposition und einer Wartungsposition ist.

8. Kühlervorrichtung nach einem der vorangehenden Ansprüche, **dadurch gekennzeichnet, dass** diese dazu ausgebildet ist, Kühlmittel zu kühlen, das in einem Kühlungssystem zirkuliert, das ein Medium in einem WHR-System (18) kühlt.

## Revendications

1. Dispositif radiateur pour refroidir un fluide dans un véhicule (1), lequel dispositif radiateur comprend un radiateur (21) comprenant une pluralité d'éléments tubulaires (21c) qui conduisent le fluide à travers le radiateur (21), des éléments de transfert de chaleur (21 d) qui sont situés dans des espaces intermédiaires de type interstices entre des éléments tubulaires adjacents (21c), de telle sorte qu'ils subdivisent l'espace de type interstice entre deux éléments tubulaires adjacents en conduits d'air (21h) qui s'étendent entre des ouvertures d'entrée (21h₁) situées dans un plan essentiellement commun (28a) sur une face avant (21a) du radiateur et des ouvertures de sortie (21h₂) situées sur une face arrière (21b) du radiateur (21), et un dispositif de fixation (30) pour monter le radiateur (21) sur une surface latérale (1b, 1c) du véhicule (1), lesquels conduits d'air (21h) forment un angle (21i) de moins de 90° par rapport au plan (28a), de telle sorte que l'air environnant s'écoulant le long de la face avant (21a) du radiateur puisse être amené dans les conduits d'air (21h) avec un changement de direction de moins de 90°, **caractérisé en ce que** le dispositif radiateur comprend un élément d'écoulement (32) adapté pour guider l'air vers la face avant (21a) du radiateur pendant le fonctionnement du véhicule (1) et un passage d'écoulement (34) pour l'air sur la face arrière (21b) du radiateur, au moyen duquel l'air s'écoule le long de la face arrière (21 b) du radiateur pendant le fonctionnement du véhicule (1).

2. Dispositif radiateur selon la revendication 1, **caractérisé en ce que** lesdits conduits d'air (21 h) forment un angle (21 i) compris dans une plage de 30-60° par rapport au plan (28a).

3. Dispositif radiateur selon la revendication 1, **caractérisé en ce que** les éléments de transfert de chaleur (21d) forment des conduits d'air essentiellement droits (21 h) à travers le radiateur (21).

4. Dispositif radiateur selon l'une quelconque des revendications précédentes, **caractérisé en ce qu'**il comprend un élément de régulation d'écoulement (33) par lequel l'écoulement d'air à travers le radiateur (21) peut être régulé.

5. Dispositif radiateur selon l'une quelconque des revendications précédentes, **caractérisé en ce que** les éléments de transfert de chaleur (21d) prennent la forme d'éléments allongés ayant des parties courbes qui sont en contact en alternance avec deux éléments tubulaires adjacents (21c).

6. Dispositif radiateur selon l'une quelconque des revendications précédentes, **caractérisé en ce que** le dispositif de fixation (30) comprend une structure de châssis (30a, 30b, 30c) adaptée pour recevoir au moins deux parties de bord du radiateur (21).

7. Dispositif radiateur selon l'une quelconque des revendications précédentes, **caractérisé en ce que** le dispositif de fixation (30) est fixé dans le véhicule (1) de telle sorte qu'il puisse être basculé autour d'un axe de pivotement (31) entre une position de montage et une position de service.

8. Dispositif radiateur selon l'une quelconque des revendications précédentes, **caractérisé en ce qu'**il est conçu pour refroidir un liquide de refroidissement qui circule dans un système de refroidissement qui refroidit un fluide dans un système WHR (18).
